# EUROPEAN PATENT SPECIFICATION

(11) **EP 4 370 379 B1**
(45) Date of publication and mention of the grant of the patent: **03.09.2025**
(21) Application number: 22744324.9
(22) Date of filing: 14.07.2022
(51) Int. Cl.: B60R 9/048, B60R 9/10

(54) **GRIPPER ASSEMBLY**
GREIFERANORDNUNG
ENSEMBLE DE PRÉHENSION

(30) Priority: 15.07.2021 NL 2028736
(43) Date of publication of application: 22.05.2024
(73) Proprietor: Indes Holding B.V., 7545 PN Enschede (NL)
(72) Inventor: KOEHORST, Bart Heinrich Andres, 7545 PN Enschede (NL)
(74) Representative: V.O.
(86) International application number: PCT/NL2022/050414
(87) International publication number: WO 2023/287290

(56) References cited:
- EP-A1- 2 863 070
- EP-A2- 1 538 027
- WO-A1-2013/165640
- US-A1- 2007 057 001

## Description

The invention relates to a gripper assembly for a bicycle carrier, the gripper assembly being configured for engaging a bicycle frame tube.

### BACKGROUND

A gripper assembly for a bicycle carrier configured for engaging a bicycle frame tube typically comprises two gripper arms which are moved away from and towards each other by means of a rotary knob. Such a gripper is for instance shown in Fig. 1 of EP 2 210 779 A1 and in Fig. 1 of EP 1 095 820 A1. In securing a bicycle to the bicycle carrier, the bicycle frame tube is placed between the gripper arms which are in an opened position. Then the rotary knob is rotated to thereby bring the gripper arms in a closed position, in which they engage the bicycle frame tube.

### SUMMARY

A disadvantage of the known gripper assembly is that tightening the rotary knob is time consuming and strenuous for the user. Often, the rotary knob is at a spot not easily accessible, or is at an ergonomically awkward angle making it difficult for the user to engage and/or rotate it.

Moreover, in modern bicycles, such as electric bicycles and electric or nonelectric mountain bikes, the cross-sectional shape of the frame tubes is often different from circular or oval. Think of a more polygonal cross section, such as, for example, a rectangular cross section of the bicycle frame tube. Also the thickness or cross section / diameter of the frame tubes may be much greater in electric bicycles than has been usual for normal bicycles to date. In the frame tubes, e.g. a battery or a part of the electric motor of the bicycle may be incorporated. Also such cross-sectionally non-circular and non-oval frame tubes of considerable thickness or diameter need to permit of engagement without this giving rise to damage.

Especially when the bicycle frames are made from carbon, they are sensitive to damaging. With carbon frames, in practice, reference is made to "cracking", a kind of tear formation under the influence of the clamping force being exerted very locally by the known grippers which often do not properly fit the modern carbon bicycle frames.

In the current bicycle carriers, often the seat tube of the bicycle frame is engaged by the known grippers. To be able to position the bicycle centered on the bicycle carrier, it is then necessary that the gripper can be adjusted in transverse direction relative to a base part of the bicycle carrier. These adjustment possibilities are limited in practice and, moreover, displacing the gripper in transverse direction is sometimes impossible or possible only to a limited extent due to a first bicycle having already been set up on the bicycle carrier. Certainly now that electric bicycles, which are often provided with a crank axle motor, are somewhat longer than normal bicycles, the centering of the bicycle on the bicycle carrier in transverse direction is of greater relevance because otherwise the bicycle, in transverse direction, projects too far outside of the vehicle on which the bicycle carrier is mounted.

In some cases, even, the seat tube in which normally the saddle pin is received, is lacking altogether. The known grippers are often unsuited to engage any bicycle frame tubes other than the seat tube because, certainly with electric bicycles, the frame tubes are often too thick to be engaged by the known grippers. This may therefore present a problem for fastening such bicycles on the known bicycle carriers.

There is therefore a need for an improved gripper assembly, which removes or mitigates at least one of these problems, at least partly.

EP 2 863 070 A1 discloses a gripper assembly for a bicycle carrier according to the pre-characterizing portion of claim 1.
Relative to EP 2 863 070 A1 having the features of the pre-characterizing portion of claim 1, the gripper assembly according to the invention is additionally characterized by the features of the characterizing portion claim 1. In particular, the invention provides a gripper assembly according to the pre-characterizing portion of claim 1 which is characterized in that the transmission comprises:
- a coupling arm which is connected with the first gripper arm in a manner pivotable around a first rotation axis, and which is connected with the second gripper arm in a manner pivotable around a third rotation axis, wherein the third rotation axis extends parallel to the first rotation axis;
- a first gearwheel segment which is fixedly connected with the first gripper arm, wherein an axis of the first gearwheel segment coincides with the first rotation axis; and
- a second gearwheel segment which is fixedly connected with the second gripper arm, wherein an axis of the second gearwheel segment coincides with the third rotation axis, and
wherein teeth of the first gearwheel segment and teeth of the second gearwheel segment operatively engage each other.

With the gripper assembly, a user can engage the second gripper arm directly and move it, against the biasing mechanism, to a closed pivoted position, in which the gripper assembly engages the bicycle frame tube. Due to the ratchet mechanism, the gripper will remain in this position. The gripper thus remains clamped around the bicycle frame tube, and the first and second gripper arm will enclose the bicycle frame tube. The gripper assembly thereby provides for a solid engagement of the bicycle frame tube. The clamping force can then be limited, so that the chance of damaging of the frame can be minimized. Also, the gripper assembly, in use, can be properly operated since the second gripper arm is properly engageable for a user. Moreover, no prolonged turning of a knob is needed, as with the prior art grippers provided with a rotary knob. The gripper according to the invention hence offers a greater ease of operation with less chance of injuries and, moreover, an increased safety in that the gripper is automatically locked by the ratchet mechanism upon the second gripper arm snapping shut.

With the gripper assembly according to the invention, a bicycle frame tube can be very subtly "taken hold of', comparably to the manner in which an octopus takes hold of an object. This subtle taking hold of with the gripper according to the invention prevents damaging of the frame tube such as, for example, the above described "cracking" of carbon frame tubes.

The chance of damaging can be reduced still further by providing the inner sides of the gripper arms that bound a frame tube receiving space, with a soft, compressible layer of material, such as, for example, a layer from silicone material or other compressible plastic.

The operative engagement between teeth of the first gearwheel segment and teeth of the second gearwheel segment provides that the second gripper arm, in addition to a rotation around the first rotation axis, also has a rotation around the third rotation axis. The rotation of the second gripper arm around the third rotation axis is thus coupled to the rotation of the second gripper arm around the first rotation axis. When a user brings the second gripper arm to the closed position, the teeth of the second gearwheel segment roll on the teeth of the first gearwheel segment. Thus, a quick pivoting of the second gripper arm is realized upon a relatively small pivoting of the third rotation axis around the first rotation axis. This double rotation provides for a quick closure of the second gripper arm and, moreover, makes it possible that the gripper can be opened very far, allowing also very thick bicycle frame tubes to be received.

The invention further provides a bicycle carrier according to claim 14. More particularly, the invention provides a bicycle carrier configured for carrying at least one bicycle. The bicycle carrier comprises a frame and the gripper assembly according to the invention.

The effects and advantages of the bicycle carrier according to the invention are the same as the effects and advantages of the gripper assembly according to the invention.

Further elaborations of the invention are described in the dependent claims and will hereinafter be further clarified on the basis of an example, with reference to the figures.

### BRIEF DESCRIPTION OF THE FIGURES

Figure 1 shows a perspective view of an example of the gripper assembly according to the invention in the opened pivoted position;
Figure 2 shows a partly cutaway side view of the example of Figure 1 in the opened pivoted position;
Figure 3 shows a perspective view of the example of Figure 1 in the closed pivoted position;
Figure 4 shows a partly cutaway side view of the example of Figure 3 in the closed pivoted position;
Figure 5 shows a partly cutaway perspective view of the example of Figure 1 in a somewhat more opened closed pivoted position;
Figure 6 shows a partly cutaway perspective view of the example of Figure 5 in a somewhat more opened closed pivoted position; and
Figure 7 shows an example of a bicycle carrier provided with the gripper assembly according to the invention, with the gripper assembly engaging a bicycle on the bicycle carrier.

### DETAILED DESCRIPTION

In the following detailed description of the figures, with the aid of reference numerals, reference is made to the example that is represented in the figures. The embodiments that are described in the detailed description, however, are not limited to the example that is shown in the figures but may also be implemented in a different way than shown in the example. The embodiments described in the detailed description should therefore be read and understood also without the reference numerals. The various embodiments to be described hereinafter can be used in combination with each other or independently of each other, within the scope of the appended claims.

Most generally, the invention provides a gripper assembly 10 for a bicycle carrier 90. The gripper assembly 10 is configured for engaging a bicycle frame tube 102 and comprises a gripper 12. The gripper 12 comprises a first gripper arm 14, a second gripper arm 16, a ratchet mechanism 22, and an operating mechanism 24. The second gripper arm 16 is pivotable relative to the first gripper arm 14. The ratchet mechanism 22 is operatively connected with the second gripper arm 16 and is configured to block moving of the second gripper arm 16 to the opened pivoted position. The operating mechanism 24 is configured for unlocking the ratchet mechanism 22, so that the second gripper arm 16 is movable to the opened pivoted position.

The effects and advantages of the gripper assembly 10 have already been described in the summary and these effects and advantages are understood to have been inserted here by reference.

In an embodiment, an example of which is shown in the figures, the gripper 12 of the gripper assembly 10 can include a biasing mechanism 20 which forces the second gripper arm 16 to an opened pivoted position. Upon operation of the operating mechanism 24 for unlocking the ratchet mechanism 22, the second gripper arm 16, under the influence of the biasing mechanism 20, then moves automatically to the opened pivoted position.

Such a biasing mechanism 20 augments ease of use because the user does not need to bring the second gripper arm 16 manually to the opened pivoted position, since upon operation of the operating mechanism 24, the second gripper arm 16, under the influence of the biasing mechanism, pivots automatically into the opened pivoted position.

In an embodiment, of which an example is shown in the figures, the biasing mechanism 20 may comprise a spring 64, in further elaboration e.g. a torsion spring. Also springs of a different type could be utilized. However, a torsion spring in a fairly compact space can yet exert a substantial force on the second gripper arm 16 and this also through a large pivoting range.

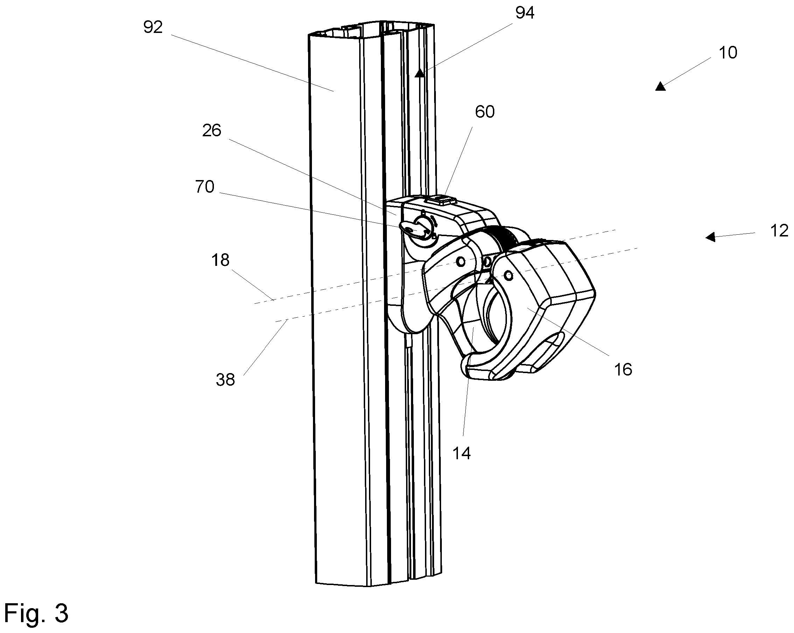

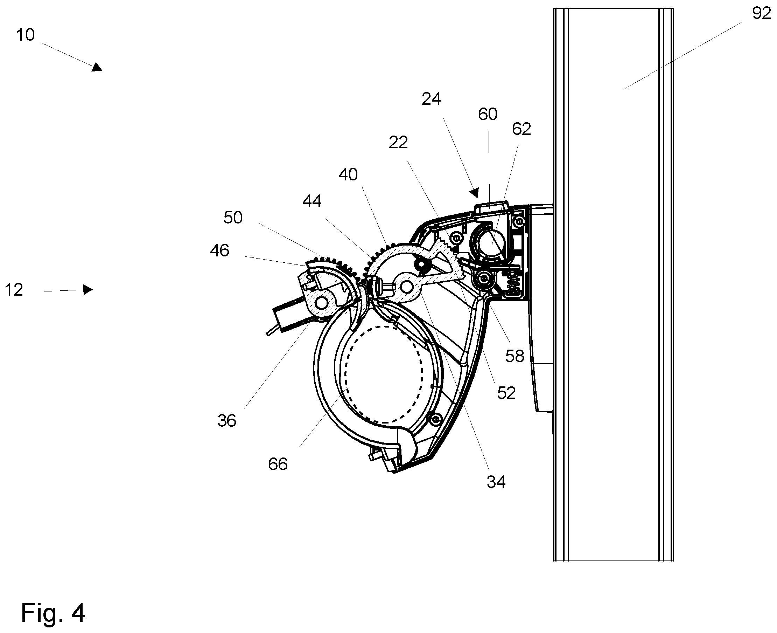

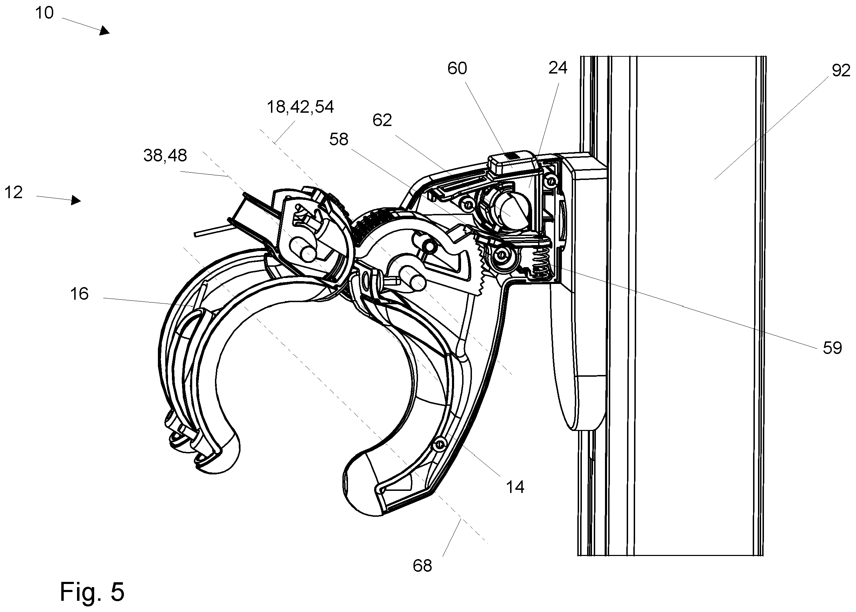

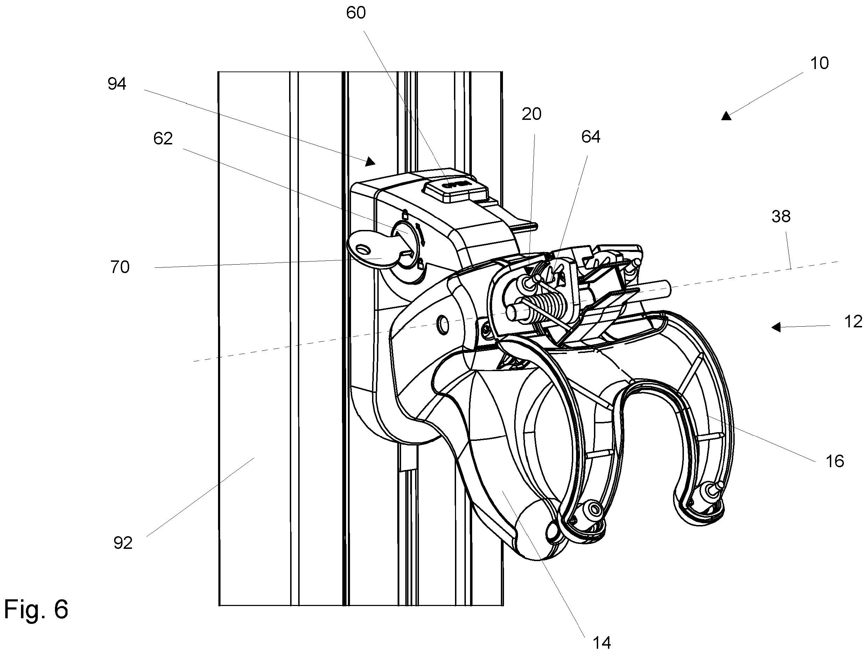

In an embodiment, of which an example is shown in the figures (see Figs. 3-6), the at least one closed pivoted position can comprise a series of different closed pivoted positions, so that frame tubes of different cross sections can be clamped in a closed pivoted position of the series of closed pivoted positions.

This offers the advantage that for different frame tube thicknesses a matching closed pivoted position from the series of closed pivoted positions is available. Retaining of the second gripper arm 16 in the matching closed pivoted position of the gripper 12 is not effected by exerting clamping force on the frame tube, as is the case with conventional grippers. Conventional bicycle carrier grippers are generally provided with a rotary knob with a threaded spindle and a nut cooperating therewith for bringing them into their closed position. These known grippers are in effect not retained in the closed position until the friction between the thread of the spindle of the rotary knob and the nut cooperating therewith rises above a defined value. Such friction does not come about to a sufficient extent until a substantial clamping force is being exerted by the gripper arms on the frame tube. Exerting a substantial clamping force on a bicycle frame tube is hence essential in the known grippers to be able to retain the known gripper in the closed position. In the gripper assembly according to the above described embodiment, retaining in a closed pivoted position does not depend on the clamping force exerted on the frame tube 102. The clamping force on the frame tube can be relatively loose, which limits the chances of damage, while the chance that the second gripper arm 16 moves to the opened pivoted position is minimal because the ratchet mechanism 22 does its retaining work independently of the force which the frame tube exerts on the gripper arms 14, 16.

The first gripper arm 14 and the second gripper arm 16 together bound a frame tube receiving space 66 for receiving therein the bicycle frame tube 102. The frame tube receiving space 66 has a central longitudinal axis 68 which in engaged condition of the bicycle frame tube 102 can substantially coincide with a central longitudinal axis 104 of the bicycle frame tube 102.

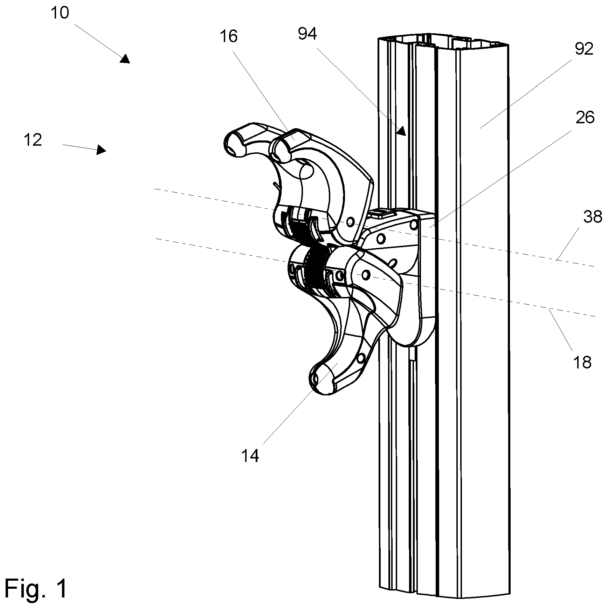

In the opened pivoted position (see Figs. 1-2), the second gripper arm 16 is pivoted away from the first gripper arm 14, such that the bicycle frame tube 102 can be taken out of the tube receiving space 66.

When the second gripper arm 16 has been brought into one of the series of closed pivoted positions, the ratchet mechanism 22 prevents the second gripper arm 16 being able to be moved to the opened pivoted position. On the other hand, the ratchet mechanism 22 does allow the second gripper arm 16, under the influence of an external force exerted thereon, to be brought to a further closed pivoted position. Once the gripper arm 16 has arrived in this further closed pivoted position, the ratchet mechanism 22 again prevents the second gripper arm 16 moving back again in the direction of the opened pivoted position.

To bring the gripper assembly 10 in a condition in which the gripper assembly 10 engages the bicycle frame tube 102, the user can move the second gripper arm 16 to the closed pivoted position. The user will thus have to move the second gripper arm 16 towards the first gripper arm 14. As has been indicated hereinbefore, the ratchet mechanism 22 takes care of the second gripper arm 16 remaining in one of the series of closed pivoted positions.

The operating mechanism 24 can unlock ratchet mechanism 22, in consequence of which the second gripper arm 16 can be moved to the opened pivoted position again. As mentioned, this moving to the opened pivoted position can be carried out manually. When the gripper 12 of the gripper assembly includes a biasing mechanism 20, moving to the opened pivoted position can take place automatically under the influence of the force exerted by the biasing mechanism 20 on the second gripper arm 16.

The ratchet mechanism 22 may for instance include a gearwheel segment 52, and a pawl 58 being under spring tension which engages the gearwheel segment 52, whereby the pawl 58, under the influence of the spring tension, is pressed against the gearwheel segment 52 and is held in engagement with it.

Unlocking of the ratchet mechanism 22 with the aid of the operating mechanism 24 may for instance be effected in that the pawl 58 is moved away from the ratchet gearwheel segment 52, in consequence of which the ratchet gearwheel segment 52 and the second gripper arm 16 connected therewith can move freely. Thereupon, the second gripper arm 16 can be automatically moved to the opened pivoted position by the biasing mechanism 20. In this way, the user can arrange that the gripper assembly 10 simply releases the bicycle frame tube 102, so that the bicycle 100 can be taken off the bicycle carrier 90.

The second gripper arm 16 is pivotably connected with the first gripper arm 14 via a transmission 30.

With such a transmission, a quicker pivoting of the second gripper arm 16 can be realized.

In an embodiment, an example of which is shown in the figures, the first gripper arm 14 and the second gripper arm 16, in the at least one closed pivoted position, together bound a frame tube receiving space 66. The transmission 30 may then be positioned between the frame tube receiving space 66 on the one hand and the ratchet mechanism 22 and the operating mechanism 24 on the other hand.

This provides the advantage that the ratchet mechanism 22 and the operating mechanism 24 are not in the way of the second gripper arm 16 upon moving thereof to the opened pivoted position. The gripper 12 according to this embodiment can therefore be opened very far, which is of advantage for being able to receive therein bicycle frame tubes 102 of a very large cross section, in other words, very thick bicycle frame tubes 102. In the known grippers with rotary knob, the spindle of the rotary knob is between the frame tube receiving space, which is defined by the two gripper arms, and the pivoting axis of the at least one pivotable gripper arm of the known gripper. Consequently, the known gripper can be opened much less far than the gripper according to the exemplary embodiment described above.

Because the known grippers cannot be opened so far, often the saddle pin is engaged now. To allow the bicycle to be properly centered in transverse direction relative to the vehicle on which the bicycle carrier is mounted, the gripper clamp must be displaceable in transverse direction. This is not necessary with the gripper assembly according to the present invention because it can be opened so far that practically any frame tube, whatever the magnitude of its cross section, can be engaged by the gripper. When the gripper assembly 10 is height-adjustable and the gripper 12 thereof is also rotatable, so that the axis of the frame tube receiving space 66 can be set in line with the axis of the frame tube 102 which is to be engaged, no displacement of the gripper assembly 10 in transverse direction is required to center the bicycle in transverse direction relative to the car. For there is always a frame tube 102 available, however thin or thick it is, that can be engaged in a suitable way while the bicycle, viewed in transverse direction, is positioned centrally relative to the vehicle. Therefore, the bicycle can always be simply aligned centrally relative to the vehicle in transverse direction.

The transmission 30 comprises a coupling arm 32, a first gearwheel segment 40, and a second gearwheel segment 46. The coupling arm 32 is connected with the first gripper arm 14 in a manner pivotable around a first rotation axis 18, and is connected with the second gripper arm 16 in a manner pivotable around a third rotation axis 38. The third rotation axis 38 extends parallel to the first rotation axis 18. The first gearwheel segment 40 is fixedly connected with the first gripper arm 14. An axis 42 of the first gearwheel segment 40 coincides with the first rotation axis 18. The second gearwheel segment 46 is fixedly connected with the second gripper arm 16. An axis 48 of the second gearwheel segment 46 coincides with the third rotation axis 38. Teeth 44 of the first gearwheel segment 40 and teeth 50 of the second gearwheel segment 46 operatively engage each other.

Such an engagement provides that the second gripper arm 16, in addition to a rotation around the first rotation axis 18, also has a rotation around the third rotation axis 38. The rotation of the second gripper arm 16 around the third rotation axis 38 is here coupled to the rotation of the second gripper arm 16 around the first rotation axis 18. When a user brings the second gripper arm 16 to the closed position, the teeth 50 of the second gearwheel segment 46 roll on the teeth 50 of the first gearwheel segment 40. The earlier-mentioned quick pivoting of the second gripper arm 16 is realized upon a relatively small pivoting of the third rotation axis 38 around the first rotation axis 18. This double rotation provides for a quick closure of the second gripper arm 16 and, moreover, makes it possible that the gripper 12 can be opened very far, allowing also very thick bicycle frame tubes 102 to be received.

A ratchet gearwheel segment 52 of the ratchet mechanism 22 may be fixedly connected with the coupling arm 32, while an axis 54 of the ratchet gearwheel segment 52 can coincide with the rotation axis 18. A pawl 58 of the ratchet mechanism 22 can engage teeth 56 of the ratchet gearwheel segment 52.

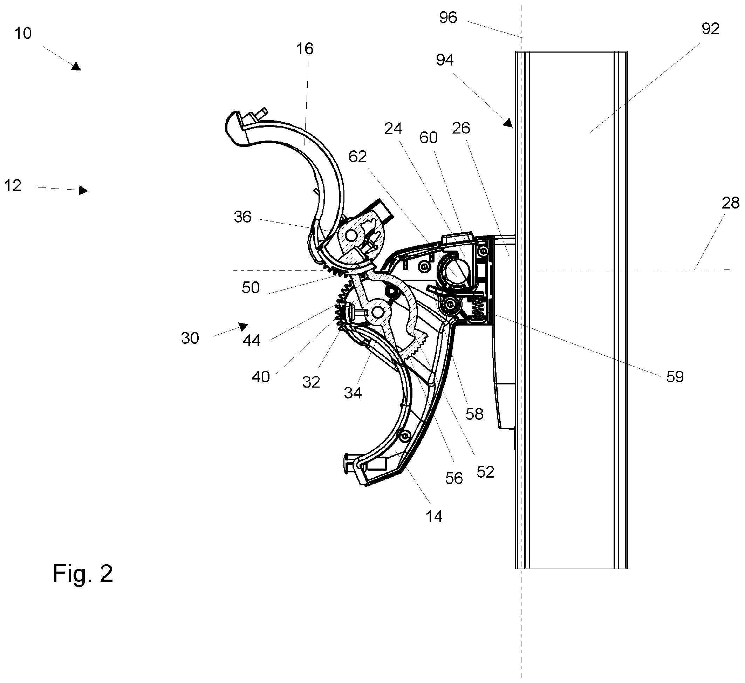

The ratchet gearwheel segment 52 may be implemented as a loose part. It is also possible, however, as shown in Figs. 2, 4 and 5, that the ratchet gearwheel segment 52 forms an integral part of the coupling arm 32.

The operating mechanism 24 may be provided with a pressable knob or button 60 which is operatively connected with the pawl 58. The pawl 58 may be pressed against the ratchet gearwheel segment 52 with the aid of a pawl spring 59, so that the pawl 58 of the ratchet mechanism 22 locks the ratchet mechanism 22 and thereby the second gripper arm 16 directly automatically in different closed pivoted positions.

A pressing of the button 60 causes the pawl 58 to be moved, against the spring action of the pawl spring 59, away from the ratchet gearwheel segment 52, thereby allowing the ratchet gearwheel segment 52 to move freely. Under the influence of the biasing mechanism 20, the second gripper arm 16 will then automatically pivot to the opened pivoted position.

In an embodiment, the gripper assembly 10 may comprise a lock 62 closable with a key, the lock 62 being operatively connected with the ratchet mechanism 22 for closing off the operability of the ratchet mechanism 22 in a closed position of the lock 62.

The lock 62 may for instance be implemented as the operating mechanism 24. The lock 62 may for instance be operatively connected with the pawl 58 of the ratchet mechanism 22, so that a rotation of the lock 62 causes the pawl 58 to be moved away from the ratchet gearwheel segment 52. Also, it is possible to combine the lock 62 with the above described pressable knob or button 60. In the closed position, the lock 62 hinders a pressing of the button 60, so that the button 60 cannot unlock the ratchet mechanism 22. Because of the lock 62, it is only possible to unlock the ratchet mechanism 22 by means of a key 70 belonging to the lock 62. Unauthorized opening of the gripper 12 is thereby made impossible, which makes it impossible, without the key, to take an engaged bicycle frame tube 102 out of the gripper 12. It will be clear that this counteracts theft of the bicycle.

In an embodiment, the gripper assembly 10 may further comprise a foot 26 with which the gripper 12 is connected, the foot 26 being configured for connection with a longitudinal guide 94 for displacement along a longitudinal guide axis 96. In this embodiment, the foot 26 is implemented as a guiding foot which may be slidably connected with a longitudinal guide 94.

Rather than with a longitudinal guide 94, in an alternative embodiment the gripper assembly 10 may comprise a foot 26 which is connected with the gripper 12 and which is configured to be connected with a frame part of the bicycle carrier 90, for instance with a free end of a pivoting arm of the bicycle carrier 90.

With the two embodiments discussed last hereinabove, the height of the gripper assembly 10 can be simply set, so that the gripper assembly 10 can be brought to the desired engagement position to engage a frame tube 102.

In an embodiment, the gripper 12 may be connected with the foot 26 in a manner pivotable around a second rotation axis 28, so that the angular position of the gripper 12 is adjustable to an angle of inclination of a frame tube 102 to be engaged relative to the horizontal. The angular position of the gripper 12 may be chosen such that a central longitudinal axis 68 of a tube receiving space 66 which is bounded by the first gripper arm 14 and the second gripper arm 16 coincides with a central longitudinal axis 104 of the bicycle frame tube 102. Such a tuning of the angular position of the gripper 12 to the angle of inclination of the bicycle frame tube 102 provides for a better engagement of the bicycle frame tube 102 by the gripper 12.

In an embodiment, of which an example is shown in the figures, the second rotation axis 28 can be substantially perpendicular to the longitudinal guide axis 96. Alternatively, or additionally, the second rotation axis 28 can be substantially perpendicular to the first rotation axis 18.

The longitudinal guide 94 may for instance be provided on a frame 92 of the bicycle carrier 90. In this way, the gripper assembly 10 is displaceable along the longitudinal guide 94 and adjustable relative to the frame 92. In this way, a position of the gripper assembly 10 can be tuned to a position of the bicycle frame tube 102.

The invention also provides a bicycle carrier 90 configured for carrying at least one bicycle 100. The bicycle carrier 90 comprises a frame 92 and the gripper assembly 10 according to the invention.

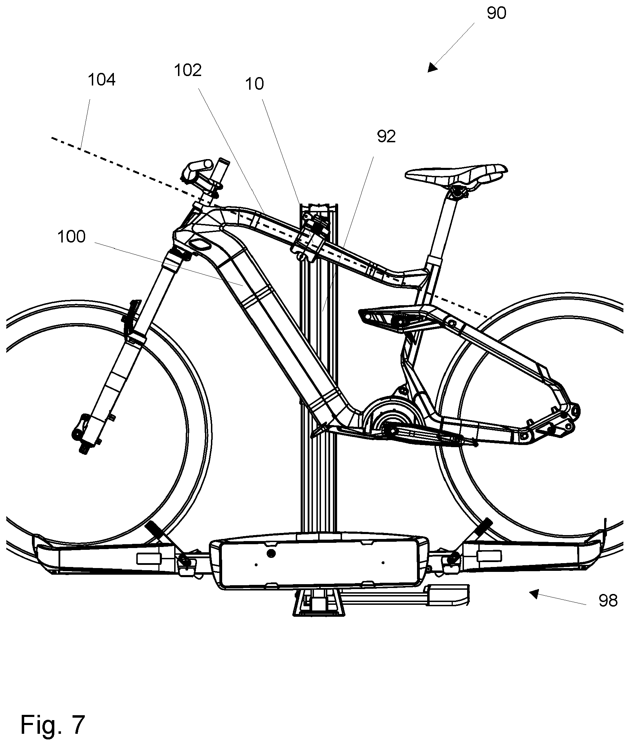

An example of the bicycle carrier is shown in Fig. 7. The bicycle carrier 90 may comprise a bicycle carrying place 98 for therein placing and supporting a bicycle 100. In use, the bicycle 100 can be placed by its wheels in the bicycle carrying place 98, after which the gripper assembly 10 can then engage a bicycle frame tube 102 of the bicycle 100 to fix the bicycle 100 relative to the bicycle carrier 90 for transportation.

The effects and advantages of the bicycle carrier 90 have already been described in the summary and these effects and advantages are understood to have been inserted here by reference.

In an embodiment, the frame 92 is provided with a longitudinal guide 94. The gripper assembly 10 includes a foot 26 which is connected with the longitudinal guide 94 and is displaceable along a longitudinal guide axis 96. The gripper 12 is connected with the foot 26 in a manner pivotable around a second rotation axis 28, the second rotation axis 28 being substantially perpendicular to the longitudinal guide axis 96.

The position of the bicycle frame tube 102 relative to the frame 92 of the bicycle carrier 90 is dictated by the positioning of the bicycle 100 relative to the bicycle carrier 90 and by the design of the bicycle 100. By virtue of the foot 26 and longitudinal guide 94, the gripper assembly 10 is displaceable relative to the frame 92 of the bicycle carrier 90. The gripper assembly 10 can thereby be set in a position which allows direct engagement of the bicycle frame tube 102 of different models of bicycles 100.

The gripper assembly 10 may include a locking with which the foot 26 can be secured relative to the longitudinal guide 94. Thus, the gripper assembly 10 may first be brought into a desired position relative to the frame 92, after which it can be secured in that position, so that the bicycle frame tube 102 can be engaged.

Due to the gripper 12 being rotatable around the second rotation axis 28, it is possible to set a rotation angle of the gripper 12 relative to the foot 26. This rotation angle can be chosen such that a central longitudinal axis 68 of a tube receiving space 66 which is bounded by the first gripper arm 14 and the second gripper arm 16 coincides with a central longitudinal axis 104 of the bicycle frame tube 102. Such a tuning of the gripper 12 to the bicycle frame tube 102 provides for a better engagement of the bicycle frame tube 102 by the gripper 12.

The invention is not limited to the examples shown in the figures. The above-described embodiments, as already indicated, may also be implemented differently than shown in the examples of the figures. The scope of protection is defined by the appended claims in which the reference numerals have no limiting effect.

### Key to symbols

10 - gripper assembly
12 - gripper
14 - first gripper arm
16 - second gripper arm
18 - first rotation axis
20 - biasing mechanism
22 - ratchet mechanism
24 - operating mechanism
26 - foot
28 - second rotation axis
30 - transmission
32 - coupling arm
34 - first end (of coupling arm)
36 - second end (of coupling arm)
38 - third rotation axis
40 - first gearwheel segment
42 - axis (of first gearwheel segment)
44 - teeth (of first gearwheel segment)
46 - second gearwheel segment
48 - axis (of second gearwheel segment)
50 - teeth (of second gearwheel segment)
52 - ratchet gearwheel segment
54 - axis (of ratchet gearwheel segment)
56 - teeth (of ratchet gearwheel segment)
58 - pawl
59 - pawl spring
60 - knob / button
62 - lock
64 - spring
66 - tube receiving space
68 - longitudinal axis (of tube receiving space)
70 - key
90 - bicycle carrier
92 - frame
94 - longitudinal guide
96 - longitudinal guide axis
98 - bicycle carrying place
100 - bicycle
102 - bicycle frame tube
104 - longitudinal axis (of bicycle frame tube)

## Claims

1. Gripper assembly (10) for a bicycle carrier (90), which gripper assembly (10) is configured for engaging a bicycle frame tube (102), wherein the gripper assembly (10) comprises:
- a gripper (12) comprising:
- a first gripper arm (14);
- a second gripper arm (16) which is pivotable relative to the first gripper arm (14) between an opened pivoted position and at least one closed pivoted position;
- a ratchet mechanism (22) which is operatively connected with the second gripper arm (16) and which is configured to block moving of the second gripper arm (16) to the opened pivoted position; and
- an operating mechanism (24) for unlocking of the ratchet mechanism (22), so that the second gripper arm (16) is movable to the opened pivoted position;
wherein the second gripper arm (16) is pivotably connected with the first gripper arm (14) via a transmission (30);
**characterized in that**
the transmission (30) comprises:
- a coupling arm (32) which is connected with the first gripper arm (14) in a manner pivotable around a first rotation axis (18), and which is connected with the second gripper arm (16) in a manner pivotable around a third rotation axis (38), wherein the third rotation axis (38) extends parallel to the first rotation axis (18);
- a first gearwheel segment (40) which is fixedly connected with the first gripper arm (14), wherein an axis (42) of the first gearwheel segment (40) coincides with the first rotation axis (18); and
- a second gearwheel segment (46) which is fixedly connected with the second gripper arm (16), wherein an axis (48) of the second gearwheel segment (46) coincides with the third rotation axis (38), and
wherein teeth (44) of the first gearwheel segment (40) and teeth (50) of the second gearwheel segment (46) operatively engage each other.

2. The gripper assembly according to claim 1, wherein the gripper (12) comprises:
- a biasing mechanism (20) which forces the second gripper arm (16) to an opened pivoted position, wherein upon operation of the operating mechanism (24) for unlocking of the ratchet mechanism (22) the second gripper arm (16) under influence of the biasing mechanism (20) automatically moves to the opened pivoted position.

3. The gripper assembly according to claim 1 or 2, wherein the at least one closed pivoted position comprises a series of different closed pivoted positions, so that frame tubes of different cross sections can be clamped in a closed pivoted position of the series of closed pivoted positions.

4. The gripper assembly according to any one of claims 1-3, wherein the first gripper arm (14) and the second gripper arm (16) together in the at least one closed pivoted position bound a frame tube receiving space (66), wherein the transmission (30) is positioned between the frame tube receiving space on the one hand and the ratchet mechanism (22) and the operating mechanism (24) on the other hand.

5. The gripper assembly according to any one of claims 1-4, wherein a ratchet gearwheel segment (52) of the ratchet mechanism (22) is fixedly connected with the coupling arm (32), wherein an axis (54) of the ratchet gearwheel segment (52) coincides with the first rotation axis (18), and wherein a pawl (58) of the ratchet mechanism (22) engages teeth (56) of the ratchet gearwheel segment (52).

6. The gripper assembly according to claim 5, wherein the operating mechanism (24) comprises:
- a depressible knob (60) which is operatively connected with the pawl (58).

7. The gripper assembly according to any one of the preceding claims, comprising a lock (62) closable with a key and which is operatively connected with the ratchet mechanism (22) for closing off the operability of the ratchet mechanism (22) in a closed position of the lock (62).

8. The gripper assembly according to claim 2, wherein the biasing mechanism (20) is a spring (64).

9. The gripper assembly according to claim 8, wherein the spring (64) is a torsion spring.

10. The gripper assembly according to any one of the preceding claims, further comprising:
- a foot (26) which is connected with the gripper (12) and which is configured for connection with a longitudinal guide (94) for displacement along a longitudinal guide axis (96).

11. The gripper assembly according to any one of claims 1-10, further comprising:
- a foot (26) which is connected with the gripper (12) and which is configured for connection with a frame part of the bicycle carrier (90), for instance with a free end of a pivoting arm of the bicycle carrier (90).

12. The gripper assembly according to claim 10 or 11, wherein the gripper (12) is connected with the foot (26) in a manner rotatable around a second rotation axis (28), so that the angular position of the gripper (12) is adaptable to an angle of inclination of a frame tube (102) to be engaged relative to the horizontal.

13. Bicycle carrier (90) configured for carrying at least one bicycle (100), comprising:
- a frame (92); and
- the gripper assembly (10) according to any one of the preceding claims.

14. The bicycle carrier according to claim 13, wherein the frame (92) is provided with a longitudinal guide (94), wherein the gripper assembly (10) comprises a foot (26) which is connected with the longitudinal guide (94) and is displaceable along a longitudinal guide axis (96), wherein the gripper (12) is connected with the foot (26) in a manner rotatable around a second rotation axis (28), wherein the second rotation axis (28) is substantially perpendicular to the longitudinal guide axis (96).

## Patentansprüche

1. Greiferanordnung (10) für einen Fahrradträger (90), wobei die Greiferanordnung (10) für den Eingriff mit einem Fahrradrahmenrohr (102) konfiguriert ist, wobei die Greiferanordnung (10) aufweist:
- einen Greifer (12) der aufweist:
- einen ersten Greifarm (14);
- einen zweiten Greifarm (16), der relativ zum ersten Greifarm (14) zwischen einer geöffneten Schwenkstellung und mindestens einer geschlossenen Schwenkstellung schwenkbar ist;
- einen Sperrklinkenmechanismus (22), der wirkverbunden mit dem zweiten Greifarm (16) verbunden ist und der so konfiguriert ist, dass er die Bewegung des zweiten Greifarms (16) in die geöffnete Schwenkposition blockiert; und
- einen Betätigungsmechanismus (24) zum Entriegeln des Sperrklinkenmechanismus (22), so dass der zweite Greifarm (16) in die geöffnete Schwenkstellung bewegt werden kann;
wobei der zweite Greifarm (16) über ein Getriebe (30) schwenkbar mit dem ersten Greifarm (14) verbunden ist;
**dadurch gekennzeichnet, dass**
das Getriebe (30) Folgendes aufweist:
- einen Koppelarm (32), der mit dem ersten Greifarm (14) um eine erste Drehachse (18) schwenkbar verbunden ist, und der mit dem zweiten Greifarm (16) um eine dritte Drehachse (38) schwenkbar verbunden ist, wobei die dritte Drehachse (38) parallel zur ersten Drehachse (18) verläuft;
- ein erstes Zahnradsegment (40), das fest mit dem ersten Greifarm (14) verbunden ist, wobei eine Achse (42) des ersten Zahnradsegments (40) mit der ersten Drehachse (18) zusammenfällt; und
- ein zweites Zahnradsegment (46), das fest mit dem zweiten Greifarm (16) verbunden ist, wobei eine Achse (48) des zweiten Zahnradsegments (46) mit der dritten Drehachse (38) zusammenfällt, und
wobei die Zähne (44) des ersten Zahnradsegments (40) und die Zähne (50) des zweiten Zahnradsegments (46) funktionsfähig ineinandergreifen.

2. Greiferanordnung nach Anspruch 1, wobei der Greifer (12) aufweist:
- einen Vorspannmechanismus (20), der den zweiten Greifarm (16) in eine geöffnete Schwenkposition zwingt, wobei sich der zweite Greifarm (16) bei Betätigung des Betätigungsmechanismus (24) zum Entriegeln des Sperrklinkenmechanismus (22) unter dem Einfluss des Vorspannmechanismus (20) automatisch in die geöffnete Schwenkposition bewegt.

3. Greiferanordnung nach Anspruch 1 oder 2, wobei die mindestens eine geschlossene Schwenkstellung eine Reihe von unterschiedlichen geschlossenen Schwenkstellungen aufweist, so dass Rahmenrohre mit unterschiedlichen Querschnitten in einer geschlossenen Schwenkstellung der Reihe von geschlossenen Schwenkstellungen geklemmt werden können.

4. Greiferanordnung nach einem der Ansprüche 1 bis 3, wobei der erste Greifarm (14) und der zweite Greifarm (16) gemeinsam in der mindestens einen geschlossenen Schwenkstellung einen Rahmenrohraufnahmeraum (66) begrenzen, wobei das Getriebe (30) zwischen dem Rahmenrohraufnahmeraum einerseits und dem Sperrklinkenmechanismus (22) und dem Betätigungsmechanismus (24) andererseits angeordnet ist.

5. Greiferanordnung nach einem der Ansprüche 1 bis 4, wobei ein Klinken-Zahnradsegment (52) des Sperrklinkenmechanismus (22) fest mit dem Koppelarm (32) verbunden ist, wobei eine Achse (54) des Klinken-Zahnradsegments (52) mit der ersten Drehachse (18) zusammenfällt, und wobei eine Klinke (58) des Sperrklinkenmechanismus (22) in Zähne (56) des Klinken-Zahnradsegments (52) eingreift.

6. Die Greiferanordnung nach Anspruch 5, wobei der Betätigungsmechanismus (24) aufweist:
- einen runterdrückbaren Knopf (60), der mit der Klinke (58) wirkverbunden ist.

7. Greiferanordnung nach einem der vorhergehenden Ansprüche, welche ein mit einem Schlüssel verschließbares Schloss (62) aufweist, das mit dem Sperrklinkenmechanismus (22) wirkverbunden ist, um die Funktionsfähigkeit des Sperrklinkenmechanismus (22) in einer geschlossenen Stellung des Schlosses (62) zu sperren.

8. Greiferanordnung nach Anspruch 2, wobei der Vorspannmechanismus (20) eine Feder (64) ist.

9. Greiferanordnung nach Anspruch 8, wobei die Feder (64) eine Torsionsfeder ist.

10. Greiferanordnung nach einem der vorangehenden Ansprüche, die ferner aufweist:
- einen Fuß (26), der mit dem Greifer (12) verbunden ist und der zur Verbindung mit einer Längsführung (94) zur Verschiebung entlang einer Längsführungsachse (96) ausgebildet ist.

11. Greiferanordnung nach einem der Ansprüche 1 bis 10, die außerdem aufweist:
- einen Fuß (26), der mit dem Greifer (12) verbunden ist und der zur Verbindung mit einem Rahmenteil des Fahrradträgers (90), beispielsweise mit einem freien Ende eines Schwenkarms des Fahrradträgers (90), ausgebildet ist.

12. Greiferanordnung nach Anspruch 10 oder 11, wobei der Greifer (12) mit dem Fuß (26) um eine zweite Drehachse (28) drehbar verbunden ist, so dass die Winkelstellung des Greifers (12) an einen Neigungswinkel eines zu ergreifenden Rahmenrohrs (102) gegenüber der Horizontalen anpassbar ist.

13. Fahrradträger (90), der zum Tragen von mindestens einem Fahrrad (100) konfiguriert ist, welcher aufweist:
- einen Rahmen (92); und
- die Greiferanordnung (10) nach einem der vorhergehenden Ansprüche.

14. Fahrradträger nach Anspruch 13, wobei der Rahmen (92) mit einer Längsführung (94) versehen ist, wobei die Greiferanordnung (10) einen Fuß (26) aufweist, der mit der Längsführung (94) verbunden und entlang einer Längsführungsachse (96) verschiebbar ist, wobei der Greifer (12) mit dem Fuß (26) um eine zweite Drehachse (28) drehbar verbunden ist, wobei die zweite Drehachse (28) im Wesentlichen senkrecht zur Längsführungsachse (96) steht.

## Revendications

1. Ensemble de préhension (10) pour un porte-vélos (90), lequel ensemble de préhension (10) est configuré pour s'engager dans un tube de cadre de vélo (102), dans lequel l'ensemble de préhension (10) comprend :
une pince (12) comprenant :
un premier bras de préhension (14) ;
un deuxième bras de préhension (16) qui peut pivoter par rapport au premier bras de préhension (14) entre une position pivotée ouverte et au moins une position pivotée fermée ;
un mécanisme à cliquet (22) qui est relié de manière opérationnelle au deuxième bras de préhension (16) et qui est configuré pour bloquer le déplacement du deuxième bras de préhension (16) vers la position pivotée ouverte ; et
un mécanisme d'actionnement (24) pour le déverrouillage du mécanisme à cliquet (22), de sorte que le deuxième bras de préhension (16) puisse être déplacé vers la position pivotée ouverte ;
dans lequel le deuxième bras de préhension (16) est relié de manière pivotante au premier bras de préhension (14) par l'intermédiaire d'une transmission (30) ;
**caractérisé en ce que**
la transmission (30) comprend :
- un bras de couplage (32) qui est relié au premier bras de préhension (14) de manière à pouvoir pivoter autour d'un premier axe de rotation (18), et qui est relié au deuxième bras de préhension (16) de manière à pouvoir pivoter autour d'un troisième axe de rotation (38), le troisième axe de rotation (38) s'étendant parallèlement au premier axe de rotation (18) ;
- un premier segment de roue dentée (40) qui est relié de manière fixe au premier bras de préhension (14), dans lequel un axe (42) du premier segment de roue dentée (40) coïncide avec le premier axe de rotation (18) ; et
- un deuxième segment de roue dentée (46) qui est relié de manière fixe au deuxième bras de préhension (16), dans lequel un axe (48) du deuxième segment de roue dentée (46) coïncide avec le troisième axe de rotation (38), et
dans lequel les dents (44) du premier segment de roue dentée (40) et les dents (50) du deuxième segment de roue dentée (46) s'engagent l'une dans l'autre de manière opérationnelle.

2. Ensemble de préhension selon la revendication 1, dans lequel la pince (12) comprend :
- un mécanisme de sollicitation (20) qui force le deuxième bras de préhension (16) à une position pivotée ouverte, dans lequel, lors de l'actionnement du mécanisme d'actionnement (24) pour le déverrouillage du mécanisme à cliquet (22), le deuxième bras de préhension (16) sous l'influence du mécanisme de sollicitation (20) se déplace automatiquement vers la position pivotée ouverte.

3. L'ensemble de préhension selon la revendication 1 ou 2, dans lequel la au moins une position pivotée fermée comprend une série de différentes positions pivotées fermées, de sorte que des tubes de cadre de différentes sections transversales peuvent être serrés dans une position pivotée fermée de la série de positions pivotées fermées.

4. L'ensemble de préhension selon l'une quelconque des revendications 1 à 3, dans lequel le premier bras de préhension (14) et le deuxième bras de préhension (16) ensemble dans l'au moins une position pivotée fermée délimitent un espace de réception de tube de cadre (66), dans lequel la transmission (30) est positionnée entre l'espace de réception de tube de cadre d'une part et le mécanisme à cliquet (22) et le mécanisme de commande (24) d'autre part.

5. L'ensemble de préhension selon l'une quelconque des revendications 1 à 4, dans lequel un segment de roue dentée à cliquet (52) du mécanisme à cliquet (22) est relié de manière fixe au bras de couplage (32), dans lequel un axe (54) du segment de roue dentée à cliquet (52) coïncide avec le premier axe de rotation (18), et
dans lequel un cliquet (58) du mécanisme à cliquet (22) s'engage dans les dents (56) du segment de roue dentée à cliquet (52).

6. L'ensemble de préhension selon la revendication 5, dans lequel le mécanisme de commande (24) comprend :
- un bouton enfonçable (60) qui est relié de manière fonctionnelle au cliquet (58).

7. Ensemble de préhension selon l'une quelconque des revendications précédentes, comprenant un verrou (62) pouvant être fermé avec une clé et qui est relié de manière fonctionnelle au mécanisme à cliquet (22) pour bloquer le fonctionnement du mécanisme à cliquet (22) dans une position fermée du verrou (62).

8. Dispositif de préhension selon la revendication 2, dans lequel le mécanisme de sollicitation (20) est un ressort (64).

9. Ensemble de préhension selon la revendication 8, dans lequel le ressort (64) est un ressort de torsion.

10. L'ensemble de préhension selon l'une quelconque des revendications précédentes, comprenant en outre :
- un pied (26) qui est relié à la pince (12) et qui est configuré pour être relié à un guide longitudinal (94) pour un déplacement le long d'un axe de guidage longitudinal (96).

11. Ensemble de préhension selon l'une quelconque des revendications 1 à 10, comprenant en outre :
- un pied (26) qui est relié à la pince (12) et qui est configuré pour être relié à une partie du cadre du porte-vélos (90), par exemple à une extrémité libre d'un bras pivotant du porte-vélos (90).

12. Ensemble de préhension selon la revendication 10 ou 11, dans lequel la pince (12) est reliée au pied (26) de manière à pouvoir tourner autour d'un deuxième axe de rotation (28), de sorte que la position angulaire de la pince (12) est adaptable à un angle d'inclinaison d'un tube de cadre (102) à engager par rapport à l'horizontale.

13. Porte-vélos (90) configuré pour transporter au moins un vélo (100), comprenant :
un cadre (92) ; et
l'ensemble de préhension (10) selon l'une quelconque des revendications précédentes.

14. Porte-vélos selon la revendication 13, dans lequel le cadre (92) est muni d'un guide longitudinal (94), dans lequel l'ensemble de préhension (10) comprend un pied (26) qui est relié au guide longitudinal (94) et est déplaçable le long d'un axe de guidage longitudinal (96), dans lequel la pince (12) est reliée au pied (26) de manière à pouvoir tourner autour d'un deuxième axe de rotation (28), dans lequel le deuxième axe de rotation (28) est sensiblement perpendiculaire à l'axe de guidage longitudinal (96).
